# EUROPEAN PATENT SPECIFICATION

(11) **EP 2 818 581 B1**
(45) Date of publication and mention of the grant of the patent: **22.03.2017**
(21) Application number: 14425070.1
(22) Date of filing: 10.06.2014
(51) Int. Cl.: C25B 1/00, C25B 1/04

(54) **Method of manufacturing a synthetic gas by electrolysis of a particular electrolyte**
Verfahren zur Herstellung eines synthetischen Gases durch Elektrolyse eines bestimmten Elektrolyten
Procédé de fabrication d'un gaz de synthèse par électrolyse d'un électrolyte particulier

(30) Priority: 11.06.2013 IT VA20130034
(43) Date of publication of application: 31.12.2014
(73) Proprietor: Ferrario, Diego, 24043 Caravaggio (BG) (IT); Palermo, Giulio, 23880 Casatenovo (LC) (IT); Aceti, Fabio, 24059 Urgnano (BG) (IT)
(72) Inventor: Ferrario, Diego, 24043 Caravagigio (IT)
(74) Representative: Forattini, Amelia

(56) References cited:
- JP-A- 2000 144 464
- JP-A- 2008 045 205
- US-A1- 2002 027 079
- US-A1- 2005 269 210
- ST JOHN M R ET AL: "Hydrogen Generation from Glucose Depolarized Water Electroysis", JOURNAL OF THE ELECTROCHEMICAL SOCIETY, ELECTROCHEMICAL SOCIETY, MANCHESTER, NEW HAMPSHIRE; US, vol. 128, no. 5, 1 May 1981 (1981-05-01), pages 1174-1176, XP002423440, ISSN: 0013-4651, DOI: 10.1149/1.2127576

## Description

0001. Nowadays there are gases that are produced by water electrolysis for a variety of industrial and civil uses. In most cases this electro-chemical process produces by cleavage an oxygen molecule and two hydrogenous molecules. These gases are usually employed in various sectors both singularly (like oxygen for the hospitals) and mixed with other gases (like hydrogenous mixed with lpg for the production of glass, or with other gases for flame cutting).

0002. So far no one could produce easy to manage combustible gases, non-explosive and easily usable by a known method, like electrolysis.Today this problem is solved thanks to a **Method of manufacturing a synthetic gas by electrolysis of a particular electrolyte,** hereinafter called FOUND with which is obtained a combustible gas that can be used directly and immediately in the current types of burners calibrated for the gas supply network.

0003. Additional features of this FOUND will be better highlighted through an analysis of the description of an application shown in the indicative but not limitative, with the help of the attached tables for: Method of manufacturing a synthetic gas by electrolysis of a particular electrolyte
Table 1:
fig. A)-Is a schematic view of the electrolytic system
   In which in a container (fig.A1) sealed by a lid (fig.A8) with a connection for gas leakage (fig. A6); there is a liquid content (fig.A2) in which two electrodes are immersed (fig.A4 and A5) connected to an electricity generator (fig.A3). The container is connected to a heat exchanger with the function of cooling the electrolytic solution (fig.A7).

### Preparatory method

0004. The fuel gas obtained from FOUND occurs, through the use of an electrolyzer of the type used for the production of hydrogen / oxygen mixture also known with the name "Brown gas" - with reference to the patent US7.014, 740 B2-Inventor Sang-Nam Kim (KR) -. This type of electrolyzer is constituted by a container sealing, inside which is normally installed a multiplicity of Cathodes alternating Anodes arranged in an electrical series in which the cathode and the anode terminal are connected respectively to the negative and positive poles of a DC rectifier.

0005. In our specific case, the electrolyzer used in the experiment has the anodes and cathodes of the size 15x15 cm with a thickness of 1 mm for a total of 14 plates; positioned at a 3 mm. distance from each other. All built entirely in stainless steel AISI 316.

0006. The voltage applied to each pair of cathode / anode is between 2 and 3 Volts with an intensity between 1.5 and 2.5 Ah.
In the electrolyzer is a mixture consisting of:
- 1000 ml of distilled water (H₂O)
- from 10 to 50 g/l (grams per liter) of potassium hydroxide or sodium hydroxide; with the function of electrolyte, necessary for the electrical conductivity
- from 20 to 100 g/l (grams per liter) of Ascorbic Acid (C₆H₈O₆)
The operating temperature is between 60-70° C (Celsius)

0007. By means of the electrolyte, a gas is generated mixture consisting of about 67% hydrogen (H), 26% of carbon dioxide (CO2), 2% Carbon Monoxide (CO), 2% oxygen. The content of hydrocarbons such as methane, ethane / ethylene, propane / propylene, other higher hydrocarbons and alcohols is limited to some 10 ppm / v.

0008. The most interesting feature of this gas obtained through FOUND, is the characteristic presence of Carbon Dioxide and Carbon Monoxide. The origin of these two elements is attributed to the introduction in the electrolyte of Ascorbic Acid (C₆H₈O₆). In this case the process may be summarized as follows:

(anode) C₆H₈O₆+6H₂O → 3CO₂+ 20H⁺ + 20 e-

(cathode) 20 H⁺ + 20 e- → 10 H₂

0009. During the process the starting electrolyte initially captures carbon dioxide with intermediate formation of carbonate and potassium bicarbonate final: only after the completion of these reactions will reach the free development of carbon dioxide gas. Since there are no separators between cathodes and anodes, the cathode and anode gases are mixed, giving origin to a gas composed by 70% hydrogen (H) and 30% of carbon dioxide (CO2); whose chemical compound is the following:
H_{2(g)} + O_{2(g)} + CO_{(g)} + CO_{2(g)} + CH_{4(g)}
+ CH_{2(g)}-
+ C₃H_{8(g)}
+ C₄H_{10(g)}
+ C₅H_{12(g)}
+ CH₃(CH₂)₄CH_{3(g)}
+ CH₃OH_{(g)}
+ C₂H₆O_{(g)}
+ CH₃CH(OH)CH_{3(g)}
+ C₆H_{6(g)}
+ C₇H_{8(g)}
+ C₈H_{10(g)}
+ C₃H₆O_{(g)}
The gas produced from this process is colorless, odorless, it generates a transparent combustion flame. The gas obtained has a high calorific value, it can be used both as fuel for flames flowing or for internal combustion engines.

0010. In laboratory experiments, it has been noticed in some cases, by chemical analysis carried out on the gas generated by FOUND, the presence of traces of nitrogen N_{2(g)}, probably due to an inadvertent contact of the gas generated with the air. Furthermore, it has been noticed that if the temperature, during electrolysis, falls below the degrees, some molecules are liquid instead of being in the gaseous state, anyway maintaining an irrelevant percentage in the final chemical compound.

0011. In the case of industrial production, the amount of the individual elements of the basic solution may vary, as well as in place of potassium carbonate other types of chemically similar salts can be used. The quantities of the individual components may slightly vary.

0012. The graphic description represented should be simply regarded as an example.

0013. The types of equipment for the electrolysis may vary depending on the technical and manufacturing needs, without prejudice to the inventive concept and the recipe of the liquid solution to be used.

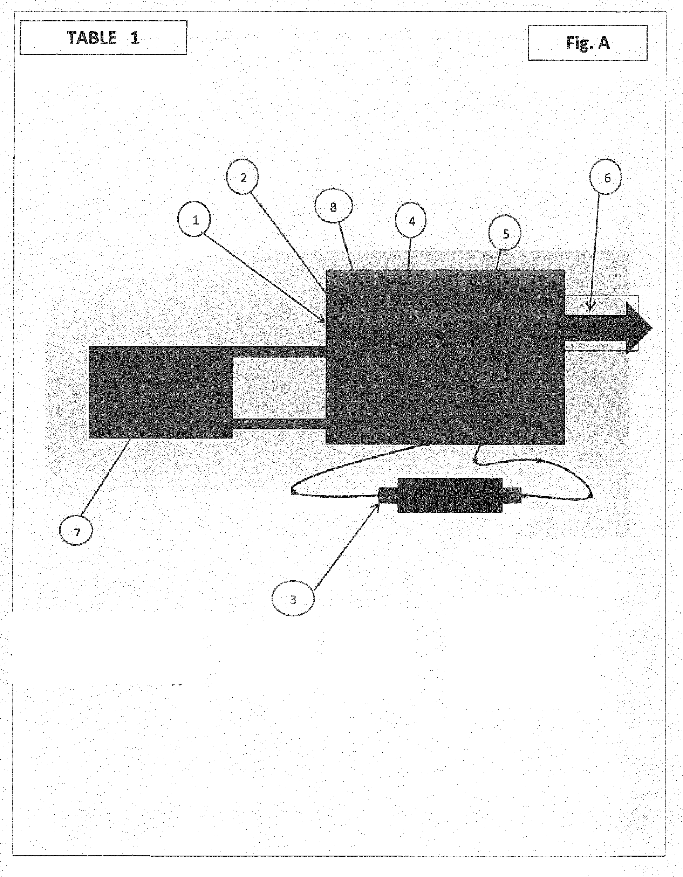

## Claims

1. Method of production of a synthetic gas by electrolysis of a particular electrolyte composed of a solution of demineralized water (H2O), potassium hydroxide (KOH) or sodium hydroxide (NaOH), and ascorbic acid (C6H806), said solution composed of, for each 1000 ml of demineralized water (H20), from 10 to 50 g/l of potassium hydroxide or sodium hydroxide and from 20 to 100 g/l of ascorbic acid.

2. Method of production of a synthetic gas by electrolysis of a particular electrolyte, as claimed in claim 1, where the electrolyte used in the apparatus or electrolyte plant is composed of: for each 1000ml of demineralized water (H2O) from 10 to 50 grams per liter of potassium hydroxide or sodium hydroxide and-from 20 to 50 grams per liter of Ascorbic Acid (C6H8O6).

3. Method of production of a synthetic gas by electrolysis of a particular electrolyte, as claimed in claim 1 and 2, in which the electrolytic reaction, transforms the basic solution in a flammable gas, usable directly and immediately.

4. Method of production of a synthetic gas by electrolysis of a particular electrolyte as claimed in claim 1, 2 or 3, in which the operating temperature remains between 60 ° and 70 ° centigrade.

5. Method of production of a synthetic gas by electrolysis of a particular electrolyte, as claimed in claims 1, 2, 3 or 4, wherein siad synthetic gas has the composition:
• From 53 % to 73% of Hydrogen (H)
• From 20 % to 32% of carbon dioxide (CO2)
• From 1 % to 3% of carbon monoxide (CO)
• From 1,5 % to 4% of oxygen (O)
• And some tens of parts per million by volume of hydrocarbons such as methane, ethane + ethylene, propane + propylene, butane + isobutane, pentane, hexane, methyl alcohol, ethyl alcohol, isopropyl alcohol, benzene, toluene, ethylbenzene + chlorobenzene and acetone.

## Patentansprüche

1. Verfahren zur Herstellung eines synthetischen Gases durch Elektrolyse eines bestimmten Elektrolyten, der aus Folgendem besteht: einer Lösung von entmineralisiertem Wasser (H₂O), Kaliumhydroxid (KOH) oder Natriumhydroxid (NaOH) und Ascorbinsäure (C₆H₈O₆), wobei die Lösung für alle 1000 ml von entmineralisiertem Wasser (H₂O) aus 10 bis 50 g/l Kaliumhydroxid oder Natriumhydroxid und aus 20 bis 100 g/l Ascorbinsäure besteht.

2. Verfahren zur Herstellung eines synthetischen Gases durch Elektrolyse eines bestimmten Elektrolyten gemäß Anspruch 1, worin der Elektrolyt, der in der Vorrichtung oder der Elektrolytenanlage verwendet wird, aus Folgendem besteht: für alle 1000 ml von entmineralisiertem Wasser (H₂O), 10 bis 50 Gramm pro Liter Kaliumhydroxid oder Natriumhydroxid und 20 bis 50 Gramm pro Liter Ascorbinsäure (C₆H₈O₆).

3. Verfahren zur Herstellung eines synthetischen Gases durch Elektrolyse eines bestimmten Elektrolyten gemäß Anspruch 1 und 2, worin die elektrolytische Reaktion die basische Lösung in ein entflammbares Gas umwandelt, das sofort direkt nutzbar ist.

4. Verfahren zur Herstellung eines synthetischen Gases durch Elektrolyse eines bestimmten Elektrolyten gemäß Anspruch 1, 2 oder 3, worin die Betriebstemperatur zwischen 60° und 70° Celsius bleibt.

5. Verfahren zur Herstellung eines synthetischen Gases durch Elektrolyse eines bestimmten Elektrolyten gemäß Anspruch 1, 2, 3 oder 4, worin das synthetische Gas folgende Zusammensetzung hat:
• von 53% bis 73% Wasserstoff (H),
• von 20% bis 32% Kohlendioxid (CO₂),
• von 1% bis 3% Kohlenmonoxid (CO)
• von 1,5% bis 4% Sauerstoff (O)
• und einige Zehnfache von Teilen je Million Teile nach Volumen von Kohlenwasserstoffen, wie Methan, Ethan + Ethylen, Propan + Propylen, Butan + Isobutan, Pentan, Hexan, Methylalkohol, Ethylalkohol, Isopropylalkohol, Benzen, Toluen, Ethylbenzen + Chlorbenzen und Aceton.

## Revendications

1. Procédé de production d'un gaz de synthèse par électrolyse d'un électrolyte particulier se composant d'une solution d'eau déminéralisée (H₂O), d'hydroxyde de potassium (KOH) ou d'hydroxyde de sodium (NaOH), et d'acide ascorbique (C₆H₈O₆), ladite solution se composant de, pour chaque 1000ml d'eau déminéralisée (H₂O), de 10 à 50 g/l d'hydroxyde de potassium ou d'hydroxyde de sodium et de 20 à 100 g/l d'acide ascorbique.

2. Procédé de production d'un gaz de synthèse par électrolyse d'un électrolyte particulier selon la revendication 1, dans lequel l'électrolyte utilisé dans l'appareil ou l'installation électrolytique se compose de: pour chaque 1000 ml d'eau déminéralisée (H₂O), de 10 à 50 grammes par litre d'hydroxyde de potassium ou d'hydroxyde de sodium et de 20 à 50 grammes par litre d'acide ascorbique (C₆H₈O₆).

3. Procédé de production d'un gaz de synthèse par électrolyse d'un électrolyte particulier selon la revendication 1 ou 2, dans lequel la réaction électrolytique, transforme la solution basique en un gaz inflammable, utilisable directement et immédiatement.

4. Procédé de production d'un gaz de synthèse par électrolyse d'un électrolyte particulier selon la revendication 1, 2 ou 3, dans lequel la température de fonctionnement reste entre 60° et 70° C.

5. Procédé de production d'un gaz de synthèse par électrolyse d'un électrolyte particulier selon la revendication 1, 2, 3 ou 4, dans lequel ledit gaz de synthèse a la composition:
• de 53% à 73% d'hydrogène (H)
• de 20% à 32% de dioxyde de carbone (CO₂)
• de 1% à 3% de monoxyde de carbone (CO)
• de 1,5% à 4% d'oxygène (O)
• et un peu (des dizaines de parties par million par volume) d'hydrocarbures tels que le méthane, l'éthane + l'éthylène, le propane + le propylène, le butane + l'isobutane, le pentane, l'hexane, le méthanol, l'éthanol, l'isopropanol, le benzène, le toluène, l'éthylbenzène + le chlorobenzène et l'acétone.
